# EUROPÄISCHE PATENTSCHRIFT

(11) **EP 2 788 401 B1**
(45) Veröffentlichungstag und Bekanntmachung des Hinweises auf die Patenterteilung: **16.09.2015**
(21) Anmeldenummer: 12799108.1
(22) Anmeldetag: 28.11.2012
(51) Int. Cl.: C08G 77/18, C08L 83/04

(54) **ZU ELASTOMEREN VERNETZBARE SILICONMASSE MIT EINVERNETZBAREN POLYGLYKOLETHERN**
SILICON COMPOSITION WHICH CAN BE CROSSLINKED INTO ELASTOMERS AND WHICH COMPRISES CROSSLINKABLE POLYGLYCOL ETHERS
MATIÈRE DE SILICONE POUVANT ÊTRE RÉTICULÉE POUR FORMER DES ÉLASTOMÈRES, CONTENANT DES ÉTHERS POLYGLYCOLIQUES POUVANT ÊTRE INCORPORÉS PAR RÉTICULATION

(30) Priorität: 09.12.2011 DE 102011088146
(43) Veröffentlichungstag der Anmeldung: 15.10.2014
(73) Patentinhaber: Wacker Chemie AG, 81737 München (DE)
(72) Erfinder: GRUNWALD, Martin, 84547 Emmerting (DE); MIEDL, Mathias, 84570 Polling (DE); WINTER, Hans-Jörg, 84489 Burghausen (DE)
(74) Vertreter: Fritz, Helmut
(86) Internationale Anmeldenummer: PCT/EP2012/073807
(87) Internationale Veröffentlichungsnummer: WO 2013/083453

(56) Entgegenhaltungen:
- DE-A1- 10 020 670
- GB-A- 802 467

## Beschreibung

Die Erfindung betrifft eine zu Elastomeren vernetzbare Siliconmasse, die einvernetzbare Polyglykolether mit mindestens einer ungesättigten Gruppe enthält.

Durch Reibung oder bei Gleichspannungsanwendungen können in Isolierstoffen, wie Siliconelastomeren elektrische Ladungen auftreten, die durch sehr hohe spezifische Volumenwiderstände im Bereich von ungefähr 10¹⁵ Ω cm nur sehr langsam abgebaut werden können.
Eine Absenkung des spezifischen Volumenwiderstands lässt sich mit elektrisch leitfähigen Füllstoffen, wie Russ, Graphit oder Metallpulver nur schwer reproduzierbar und daher sehr unzuverlässig einstellen. Darüber hinaus wirken sich diese Zusätze negativ auf die Durchschlagspannung aus.

In US 6251990 B1 sind additionsvernetzbare Siliconkautschukmassen für Hochspannungsisolatoren beschrieben, die als Thixotropierungsmittel 0,1 bis 50 Gewichtsteile Siloxan-Polyether-Blockcopolymere pro 100 Gewichtsteile Alkenylgruppen aufweisendes Siloxan enthalten. Zur Verbesserung der elektrischen Isolatoreigenschaften enthalten diese Massen viel Aluminiumhydroxid (ATH). Grosse Mengen an Aluminiumhydroxid verschlechtern aber die mechanischen Eigenschaften des Siliconkautschuks.

In DE 10020670 sind mit Polyalkylenglykolresten modifizierte Polyorganosiloxane beschrieben, die aufgrund des hohen Gehalts von mehr als 50 Gew.-% an Polyalkylenglykolresten stark hydrophil sind. Diese Polyorganosiloxane dienen als Additive in Farben und Lacken und in Polyurethanschäumen.

EP 1922352 beschreibt die Herstellung von hydrophilen Siliconorganocopolymeren mittels radikalischer Polymerisation, Die Siliconorganocopolymere enthalten Polyglykoletherreste.

In EP 602128 ist eine permanent wasserbenetzbare Vulkanisate ergebende Polysiloxanmasse beschrieben, bei der ein Polyglykoletherreste und Vinylreste aufweisendes Siloxan als Hydrophilmodifier in die Polysiloxanmasse einvernetzt wird. Die Polysiloxanmasse wird als dentale Abdruckmasse verwendet.

Gegenstand der Erfindung ist eine zu Elastomeren vernetzbare Siliconmasse (M), welche einvernetzbare Polyglykoletherverbindungen (PE) mit mindestens einer ungesättigten Gruppe enthält, die Strukturelemente der allgemeinen Formel I

(O-(CH₂)ᵥ)_{w}-O (I),

enthalten, in der
- **v**: die Werte 1, 2, 3 oder 4 und
- **w**: Werte von 2 bis 50 bedeuten,
wobei der Gehalt an Strukturelementen der allgemeinen Formel I in der Siliconmasse (M) 0,001 bis 0,067 Gew.-% beträgt.

Überraschenderweise wurde festgestellt, dass durch einen geringen Gehalt an einvernetzbaren Polyglykoletherverbindungen (PE) modifizierte Siliconmassen (M) zu Siliconelastomeren vernetzen, die spezifische Volumenwiderstände aufweisen, die nicht mehr als 10¹³ bis 9·10¹⁴ Ω·cm betragen. Der spezifische Volumenwiderstand lässt sich leicht und gezielt einstellen. Die modifizierten Siliconelastomere sind immer noch hervorragende Isolatoren und weisen beispielsweise im Vergleich zu nicht modifizierten Siliconelastomeren nahezu unverändert hohe Durchschlagspannungen auf. Überraschenderweise sinken die Randwinkel Θ eines Wassertropfens trotz des Einvernetzens einer hydrophilen Polyglykoletherverbindung (PE) auf dem modifizierten Siliconelastomer bei geringen Mengen der Polyglykoletherverbindung (PE) in nur geringem Maße ab. Die mechanischen Eigenschaften werden durch die geringen Mengen der Polyglykoletherverbindung (PE) nur wenig beeinflusst.

Die Polyglykoletherreste müssen einvernetzt sein, um eine Diffusion im Material zu vermeiden, die zu inhomogenem Verhalten führen könnte.

Gegenstand der Erfindung ist deshalb auch ein Verfahren zur Erniedrigung des spezifischen Volumenwiderstands einer zu Elastomeren vernetzten Siliconmasse, bei dem die unvernetzte Siliconmasse (M) mit einvernetzbaren Polyglykoletherverbindungen (PE) mit mindestens einer ungesättigten Gruppe modifiziert wird, die Strukturelemente der allgemeinen Formel I

(O-(CH₂)ᵥ)_{w}-O (I),

enthalten, in der
- **v**: die Werte 1, 2, 3 oder 4 und
- **w**: Werte von 2 bis 50 bedeuten,
wobei der Gehalt an Strukturelementen der allgemeinen Formel I in der Siliconmasse (M) 0,001 bis 0,067 Gew.-% beträgt.

Vorzugsweise beträgt der Gehalt an Strukturelementen der allgemeinen Formel I in der Siliconmasse (M) 0,005 bis 0,033 Gew.-%.

Ebenso Gegenstand der Erfindung ist deshalb auch eine zu Elastomeren vernetzbare Siliconmasse (M), welche einen derartigen Gehalt an einvernetzbaren Polyglykoletherverbindungen (PE) mit mindestens einer ungesättigten Gruppe enthält, die Strukturelemente der allgemeinen Formel I

(O-(CH₂)ᵥ)_{w}-O (I),

enthalten, in der
- **v**: die Werte 1, 2, 3 oder 4 und
- **w**: Werte von 2 bis 50 bedeuten,
dass der spezifische Volumenwiderstand 10¹³ bis 9·10¹⁴ Ω·cm beträgt.

Die Polyglykoletherverbindungen (PE) weisen mindestens eine ungesättigten Gruppe auf, mit der sie in die Siliconmasse (M) über eine Anlagerungsreaktion (Hydrosilylierung) mit einer SiH-funktionellen Verbindung einvernetzt werden können.

**v** bedeutet vorzugsweise 2 oder 3. w bedeutet vorzugsweise Werte von 3 bis 20, insbesondere 5 bis 10.

Die vernetzbare Siliconmasse (M) kann peroxidisch vernetzend oder additionsvernetzend sein.

Die zu Elastomeren vernetzbare Siliconmasse (M) enthält vorzugsweise die Bestandteile
(A) 100 Gewichtsteile mindestens zwei Alkenylgruppen pro Molekül enthaltendes Polyorganosiloxan mit einer Viskosität bei 25°C von 0,1 bis 500 000 Pa·s,
(B) 1 bis 200 Gewichtsteile Füllstoff,
(C) Vernetzungskomponente, die ausgewählt wird aus
   (C1)organischem Peroxid oder
   (C2)mindestens zwei SiH-Funktionen pro Molekül enthaltender Organosiliciumverbindung in Kombination mit Hydrosilylierungskatalysator (C3) und
(D) einvernetzbare Polyglykoletherverbindungen (PE), die die vorstehend beschriebenen Strukturelemente der allgemeinen Formel I enthalten,
   wobei der Gehalt an Strukturelementen der allgemeinen Formel I in der Siliconmasse (M) 0,01 bis 0,5 Gew.-% beträgt.

Die Zusammensetzung des Alkenylgruppen enthaltenden Polyorganosiloxans (A) entspricht vorzugsweise der durchschnittlichen allgemeinen Formel II

R³ₓR⁴ _{y}SiO_{(4-x-y)/2} (II),

in der
- **R³**: einen einwertigen C₁-C₁₀-Kohlenwasserstoffrest, der aliphatische Kohlenstoff-Kohlenstoff Mehrfachbindungen enthält,
- **R⁴**: einen einwertigen C₁-C₁₀-Kohlenwasserstoffrest, der frei ist von aliphatischen Kohlenstoff-Kohlenstoff Mehrfachbindungen
- **x**: eine solche nichtnegative Zahl, daß mindestens zwei Reste **R³** in jedem Molekül vorhanden sind, und
- **y**: eine nicht negative Zahl, so daß **(x+y)** im Bereich von 1,8 bis 2,5 liegt, bedeuten.

Die Alkenylgruppen **R³** sind einer Anlagerungsreaktion mit einem SiH-funktionellen Vernetzungsmittel zugänglich. Üblicherweise werden Alkenylgruppen mit 2 bis 6 Kohlenstoffatomen, wie Vinyl, Allyl, Methallyl, 1-Propenyl, 5-Hexenyl, Ethinyl, Butadienyl, Hexadienyl, Cyclopentenyl, Cyclopentadienyl, Cyclohexenyl, vorzugsweise Vinyl und Allyl, verwendet.

Die Reste **R³** können in jeder Position der Polymerkette, insbesondere an den endständigen Siliciumatomen, gebunden sein.

Beispiele für C₁-C₁₀-Kohlenwasserstoffreste ohne aliphatische Kohlenstoff-Kohlenstoff-Mehrfachbindung **R⁴** sind Alkylreste, wie der Methyl-, Ethyl-, n-Propyl-, iso-Propyl-, n-Butyl-, isoButyl-, tert.-Butyl-, n-Pentyl-, iso-Pentyl-, neo-Pentyl-, tert.-Pentylrest, Hexylreste, wie der n-Hexylrest, Heptylreste, wie der n-Heptylrest, Octylreste, wie der n-Octylrest und iso-Octylreste, wie der 2,2,4-Trimethylpentylrest, Nonylreste, wie der n-Nonylrest, Decylreste, wie der n-Decylrest, Dodecylreste, wie der n-Dodecyl-rest, und Octadecylreste, wie der n-Octadecylrest, Cycloalkylreste, wie Cyclopentyl-, Cyclohexyl-, Cycloheptyl- und Methyl-cyclohexylreste, Arylreste, wie der Phenyl-, Naphthyl-, Anthryl- und Phenanthrylrest, Alkarylreste, wie o-, m-, p-Tolylreste, Xylylreste und Ethylphenylreste, und Aralkylreste, wie der Benzylrest, der α- und der β-Phenylethylrest. Bevorzugt sind Methyl- Ethyl-und n-Propylrest.

Beispiele für substituierte Reste **R⁴** sind Halogenalkylreste, wie der 3,3,3-Trifluor-n-propylrest, der 2,2,2,2',2',2'-Hexafluor-isopropylrest und der Heptafluorisopropylrest.

**R⁴** weist vorzugsweise 1 bis 6 Kohlenstoffatome auf. Insbesondere bevorzugt sind Methyl und Phenyl.

Bestandteil (A) kann auch eine Mischung verschiedener Alkenylgruppen enthaltender Polyorganosiloxane sein, die sich beispielsweise im Alkenylgruppengehalt, der Art der Alkenylgruppe oder strukturell unterscheiden.

Die Struktur der Alkenylgruppen enthaltenden Polyorganosiloxane (A) kann linear, cyclisch oder auch verzweigt sein. Der Gehalt an zu verzweigten Polyorganosiloxanen führenden tri- und/oder tetrafunktionellen Einheiten, ist typischerweise sehr gering, nämlich vorzugsweise höchstens 20 Mol-%, insbesondere höchstens 0,1 Mol-%.

Vorzugsweise beträgt **(x+y)** 1,9 bis 2,2.

Besonders bevorzugt ist die Verwendung Vinylgruppen enthaltender Polydimethylsiloxane, deren Moleküle der allgemeinen Formel III

(ViMe₂SiO_{1/2})₂(ViMeSiO)ₚ(Me₂SiO)_{q} (III),

entsprechen, wobei die nichtnegativen ganzen Zahlen **p** und **q** folgende Relationen erfüllen: **p**≥0, 50<**(p+q)**<20000, vorzugsweise 200<**(p+q)**<1000, und 0<**(p+1)**/**(p+q)**<0, 2.

Die Viskosität des Polyorganosiloxans (A) beträgt bei 25°C vorzugsweise 0,05 bis 100000 Pa·s, insbesondere 1 bis 15000 Pa·s.

Beispiele für nicht-verstärkenden Füllstoffe (B) sind mineralische oder organische Füllstoffe, wie Quarz, z.B. als Quarzmehl, Talkum, Diatomeenerde, Tone, Kreide, Lithopone, Ruße, Graphit, Metalloxide, Metallcarbonate, -sulfate, Metallsalze von Carbonsäuren, Metallstäube, Fasern, wie Glasfasern, Kunststofffasern, Kunststoffpulver. Die Füllstoffe (B) können auch oberflächenbehandelt sein, z.B. mit Silylierungsmittel.

Beispiele für verstärkende Füllstoffe (B) sind pyrogene oder gefällte Kieselsäuren sowie Aluminiumhydroxid (ATH), wobei pyrogene und gefällte Kieselsäuren bevorzugt sind.

Vorzugsweise enthalten die Siliconmassen (M) vorzugsweise 10 bis 150 Gewichtsteile insbesondere 20 bis 50 Gewichtsteile Füllstoff (B).

Die genannten verstärkenden Füllstoffe können hydrophilen Charakter haben oder nach bekannten Verfahren hydrophobiert sein. Beim Einmischen hydrophiler Füllstoffe ist die Zugabe eines Hydrophobierungsmittels erforderlich.

Der mineralische verstärkende Füllstoff (B) weist vorzugsweise eine BET-Oberfläche von mindestens 50 m²/g, insbesondere mindestens 100 m²/g nach DIN EN ISO 9277 auf.

Die Siliconmassen (M) enthalten vorzugsweise höchstens 100 Gewichtsteile Aluminiumhydroxid, insbesondere höchstens 50 Gewichtsteile Aluminiumhydroxid.

Die Siliconmassen (M) können als Vernetzungskomponente (C) organisches Peroxid (C1) enthalten. Durch organisches Peroxid (C1) die als Quelle für freie Radikale dienen, werden die Siliconmassen mittels freier Radikale vernetzt.

Beispiele für organische Peroxide (C1) sind Acylperoxide, wie Dibenzoylperoxid, Bis-(4-chlorbenzoyl)-peroxid, Bis-(2,4-dichlorbenzoyl)-peroxid und Bis-(4-methylbenzoyl)-peroxid; Alkylperoxide und Arylperoxide, wie Di-tert.-butylperoxid, 2,5-Bis-(tert.-butylperoxy)-2,5-dimethylhexan, Dicumylperoxid und 1,3-Bis-(tert.-butylperoxy-isopropyl)-benzol; Perketale, wie 1,1-Bis-(tert.-butylperoxy)-3,3,5-trimethylcyclohexan; Perester, wie Diacetylperoxydicarbonat, tert.-Butylperbenzoat, tert.-Butylperoxy-isopropylcarbonat, Tert.-butylperoxy-isononanoat, Dicyclohexylperoxydicarbonat und 2,5-Dimethyl-hexan-2,5-diperbenzoat, tert.-Butyl-β-hydroxyethylperoxid. Auch eine Kombination von organischen Peroxiden (C1) kann eingesetzt werden, wie Bis-4-Methylbenzoylperoxid und eine einzige Verbindung oder mindestens zwei der Verbindungen aus der Gruppe, die aus Benzoylperoxid, Dicumylperoxid, 2,5-Dimethylhexan-2,5-di-perbenzoat, Ditertiär-butylperoxid besteht.

Im Falle der peroxidischen Vernetzung enthalten die Siliconmassen (M) vorzugsweise 0,01 bis 10 Gewichtsteile, insbesondere 0,1 bis 0,5 Gewichtsteile organisches Peroxid (C1).

Im Falle der platinkatalysierten Hydrosilylierung besitzt die mindestens zwei SiH-Funktionen pro Molekül enthaltende Organosiliciumverbindung (C2), vorzugsweise eine Zusammensetzung der durchschnittlichen allgemeinen Formel IV

HᵣR⁶ₛSiO_{(4-m-n)/2} (IV),

in der
- **R⁵**: einen einwertigen C₁-C₁₀- Kohlenwasserstoffrest, der frei ist von aliphatischen Kohlenstoff-Kohlenstoff Mehrfachbindungen und
- **r** und **s**: nichtnegative ganze Zahlen sind,
mit der Maßgabe, dass 0.5<**(r+s)**<3,0 und 0<r<2, und dass mindestens zwei siliciumgebundene Wasserstoffatome pro Molekül vorhanden sind.

Beispiele für **R⁵** sind die für **R⁴** angegebenen Reste. **R⁵** weist vorzugsweise 1 bis 6 Kohlenstoffatome auf. Insbesondere bevorzugt sind Methyl und Phenyl.

Bevorzugt ist die Verwendung einer drei oder mehr SiH-Bindungen pro Molekül enthaltenden Organosiliciumverbindung (C2). Bei Verwendung einer nur zwei SiH-Bindungen pro Molekül aufweisenden Organosiliciumverbindung (C2) empfiehlt sich die Verwendung eines Polyorganosiloxans (A), das über mindestens drei Alkenylgruppen pro Molekül verfügt.

Der Wasserstoffgehalt der Organosiliciumverbindung (C2), welcher sich ausschließlich auf die direkt an Siliciumatome gebundenen Wasserstoffatome bezieht, liegt vorzugsweise im Bereich von 0,002 bis 1,7 Gew.-% Wasserstoff, vorzugsweise von 0,1 bis 1,7 Gew.-% Wasserstoff.

Die Organosiliciumverbindung (C2) enthält vorzugsweise mindestens drei und höchstens 600 Siliciumatome pro Molekül. Bevorzugt ist die Verwendung von Organosiliciumverbindung (C2), die 4 bis 250 Siliciumatome pro Molekül enthält.

Die Struktur der Organosiliciumverbindung (C2) kann linear, verzweigt, cyclisch oder netzwerkartig sein.

Besonders bevorzugte Organosiliciumverbindungen (C2) sind lineare Polyorganosiloxane der allgemeinen Formel V

(HR⁶₂SiO_{1/2})ₖ(R⁶₃SiO_{1/2})₁(HR⁶SiO_{2/2})ₒ(R⁶₂SiO_{2/2})ₜ (V),

wobei
**R⁶** die Bedeutungen von **R⁵** hat und
die nichtnegativen ganzen Zahlen k, **l**, **o** und t folgende Relationen erfüllen: **(k+1)** =2, **(k+o)** >2, 5< **(o+t)** <200 und 1<**o/ (o +t)** <0,1.

Die SiH-funktionelle Organosiliciumverbindung (C2) ist vorzugsweise in einer solchen Menge in der vernetzbaren Siliconmasse enthalten, dass das Molverhältnis von SiH-Gruppen zu Alkenylgruppen bei 0,5 bis 5, insbesondere bei 1,0 bis 3,0 liegt.

Als Hydrosilylierungskatalysator (C3) können alle bekannten Katalysatoren eingesetzt werden, welche die bei der Vernetzung von additionsvernetzenden Siliconmassen ablaufenden Hydrosilylierungsreaktionen katalysieren. Als Hydrosilylierungskatalysatoren (C3) können insbesondere Metalle und deren Verbindungen, wie Platin, Rhodium, Palladium, Ruthenium und Iridium, vorzugsweise Platin, eingesetzt werden. Vorzugsweise werden Platin und Platinverbindungen verwendet. Besonders bevorzugt werden solche Platinverbindungen, die in Polyorganosiloxanen löslich sind. Als lösliche Platinverbindungen können beispielsweise die Platin-Olefin-Komplexe der Formeln (PtCl₂.Olefin)₂ und H(PtCl₃ Olefin) verwendet werden, wobei bevorzugt Alkene mit 2 bis 8 Kohlenstoffatomen, wie Ethylen, Propylen, Isomere des Butens und Octens, oder Cycloalkene mit 5 bis 7 Kohlenstoffatomen, wie Cyclopenten, Cyclohexen und Cyclohepten, eingesetzt werden. Weitere lösliche Platin-Katalysatoren sind der Platin-Cyclopropan-Komplex der Formel (PtCl₂C₃H₆)₂, die Umsetzungsprodukte von Hexachloroplatinsäure mit Alkoholen, Ethern und Aldehyden bzw. Mischungen derselben oder das Umsetzungsprodukt von Hexachloroplatinsäure mit Methylvinylcyclotetrasiloxan in Gegenwart von Natriumbicarbonat in ethanolischer Lösung. Besonders bevorzugt sind Komplexe des Platins mit Vinylsiloxanen, wie sym-Divinyltetramethyldisiloxan. Ebenfalls sehr geeignet sind die in EP-A-1077226 und EP-A-994159 beschriebenen Platinverbindungen.

Hydrosilylierungskatalysator (C3) kann in jeder beliebigen Form eingesetzt werden, beispielsweise auch in Form von Hydrosilylierungskatalysator enthaltenden Mikrokapseln, oder Organopolysiloxanpartikeln, wie beschrieben in EP-A-1006147.

Der Gehalt an Hydrosilylierungskatalysatoren (C3) wird so gewählt, dass die additionsvernetzbare Siliconmasse einen Pt-Gehalt von 0,1-200 ppm, bevorzugt von 0,5-40 ppm besitzt.

Vorzugsweise weisen die einvernetzbaren Polyglykoletherverbindungen (PE) die allgemeine Formel VI

[R₃SiO_{1/2}]ₐ[R¹R₂SiO_{1/2}]_{b}[ZR₂SiO_{1/2}]_{c}[ZRR¹SiO_{1/2}]_{d} [RR¹SiO_{2/2}]ₑ[R₂SiO_{2/2}]_{f}[SiO_{4/2}]_{g}[RSiO_{3/2}]ₕ[R¹SiO_{3/2}]ᵢ (VI)

auf, in der die Reste
- **R**: Wasserstoffatome oder gleiche oder verschiedene einwertige, unsubstituierte oder halogensubstituierte über SiC gebundene C₁-C₁₂-Kohlenwasserstoffreste bedeuten, wobei mindestens einer der Reste **R** eine aliphatische Doppelbindung aufweist,
- **R¹**: die allgemeine Formel VII
E[OY]_{X}R² (VII)

bedeutet, in der
- **E**: eine Einfachbindung oder einen C₁-C₆- Alkylenrest,
- **Y**: gleiche oder verschiedene C₁-C₄-Alkylenreste bedeutet,
- **R²**: eine Hydroxylgruppe, einen C₁-C₁₀₀-Kohlenwasserstoffoxy-, C₁-C₆-Oxycarbonylalkylrest oder Siloxanrest bedeutet,
- **x**: die Werte 1 bis 20 hat, und
- **z**: die Bedeutungen von **R²** aufweist oder ein Halogenatom bedeutet,
mit der Maßgabe, dass a, b, c und d jeweils unabhängig voneinander Werte von 0 bis 8 haben, die Summe a+b+c+d 2 bis 8 beträgt, die Summe a+b+c+d+e+f+g+h+i 10 bis 400 beträgt und das Verhältnis der Summen a+c+f+g+h: b+d+e+i 100: 1 bis 1: 1 beträgt.

Vorzugsweise bedeuten die Reste **R** keine Wasserstoffatome. Beispiele für unsubstituierte Reste **R** ohne aliphatische Doppelbindung sind vorstehend bei **R⁴** aufgeführt.
Die vorstehenden Reste **R** enthalten gegebenenfalls eine aliphatische Doppelbindung. Beispiele sind Alkenylreste, wie der Vinyl-, Allyl-, 5-Hexen-1-yl-, E-4-Hexen-1-yl-, Z-4-Hexen-1-yl-, 2-(3-Cyclohexenyl)- ethyl- und Cyclododeca-4,8-dienylrest.

Beispiele für halogensubstituierte C₁-C₁₂-Kohlenwasserstoffreste **R** sind mit Fluor-, Chlor-, Brom- und Jodatomen substituierte Alkylreste, wie der 3,3,3-Trifluor-n-propylrest, der 2,2,2,2' ,2'-Hexafluorisopropylrest, der Heptafluorisopropylrest, und Halogenarylreste, wie der o-, m-, und p-Chlorphenylrest.

Bevorzugte Reste **R** ohne aliphatische Doppelbindung sind der Methyl- und Phenylrest. Bevorzugte Reste **R** mit aliphatischer Doppelbindung sind der Vinyl-, Allyl-, und 5-Hexen-1-ylrest.

Die Alkylenreste **Y** sind zweiwertige gerad- oder verzweigtkettige Alkylreste, die über zwei Bindungen an Kohlenstoffatomen des Alkylrestes in die einvernetzbaren Polyglykoletherverbindungen (PE) eingebunden sind.
Die C₁-C₁₀₀-Kohlenwasserstoffoxyreste **R²** sind über ein Sauerstoffatom gebundene gerad- oder verzweigtkettige Kohlenwasserstoffreste, insbesondere C₁-C₁₀-Alkylreste, Die Oxycarbonylalkylreste sind Carbonsäurereste mit einem geradoder verzweigtkettigen Alkylrest. Die vorstehenden Beispiele für Alkylreste beziehen sich auch auf die vorstehend erläuterten Alkylen-, Alkoxy- und Oxycarbonylalkylreste. Bevorzugte Alkylen-, Alkoxy- und Oxycarbonylalkylreste haben 1 bis 3 Kohlenstoffatome.
Der Siloxanrest **R²** kann geradkettig oder verzweigt sein.
Vorzugsweise enthält der Siloxanrest **R²** 2 bis 15 Siloxaneinheiten. Vorzugsweise enthält der Siloxanrest **R²** einwertige, unsubstituierte oder halogensubstituierte über SiC gebundene C₁-C₁₂-Kohlenwasserstoffreste, wobei auch mindestens einer der Reste **R** eine aliphatische Doppelbindung aufweisen kann.

Große Werte von f und kleine Werte von e und x verbessern die Mischbarkeit von Siliconmasse (M) und Polyglykoletherverbindungen (PE). Die bevorzugten Polyglykoletherverbindungen (PE) vermischen sich gut mit den Komponenten (A) und (C).

Vorzugsweise beträgt das Verhältnis a + c + f + g + h : x(b + d + e + i) 60:40 bis 90:10. Vorzugsweise hat x Werte von 3 bis 10.
Die Mischbarkeit der Polyglykoletherverbindungen (PE) mit der Siliconmasse (M) ist besonders gut, wenn eine relativ geringe Verzweigung des Siloxangerüsts der Polyglykoletherverbindungen, d.h. f > 0,8(f + g + h + i) und e > 0,6(d + e + i) eingehalten wird, b, c, d, g, h und i < 0, 2 (a + b + c + d + e + f + g + h + i), insbesondere < 0,1(a + b + c + d + e + f + g + h + i) und wenn vorzugsweise mehr als die Hälfte der Endgruppen im Siloxangerüst ausschließlich Reste **R** tragen sollen, d.h. a > 0,5 (a + b + c + d), insbesondere a > 0,6 (a + b + c + d).
Gut verarbeiten, d.h. schnell und homogen mit der Polysiloxanmasse (M) vermischen lassen sich die Polyglykoletherverbindungen (PE), wenn die Summe a + b + c + d + e + f + g + h + i 10 bis 400, vorzugsweise 10 bis 220, insbesondere 20 bis 160 beträgt.
Herstellungsbedingt weisen die Polyglykoletherverbindungen (PE) oft geringe Mengen Reste **Z** auf, die eine Hydroxylgruppe bedeuten. Wenn die Polyglykoletherverbindungen (PE) Si-H-Gruppen aufweisen oder in eine Si-H-Gruppen haltige Komponente (C) gemischt werden, muss in diesem Fall c + d < 0,02(a + b + c + d + e + f + g + h + i) sein, um eine die Lagerstabilität beeinträchtigende Wasserstoffentwicklung gering zu halten. Die hydrolysierbaren Gruppen **Z** sind vorzugsweise in weniger als 10% der Siloxaneinheiten enthalten, d.h. c + d < 0,1 (a + b + c + d + e + f + g + h + i).

Vorzugsweise werden die Polyglykoletherverbindungen (PE) nach dem in EP 602128 beschriebenen Verfahren hergestellt. Die Polyglykoletherverbindungen (PE) sind dann frei von Edelmetallkatalysator.

Aus der Siliconmasse (M) werden vorzugsweise Elastomere und Formteile für die Elektroisolation, insbesondere für Gleichstrom hergestellt.

Alle vorstehenden Symbole der vorstehenden Formeln weisen ihre Bedeutungen jeweils unabhängig voneinander auf. In allen Formeln ist das Siliciumatom vierwertig.

In den folgenden Beispielen sind, falls jeweils nicht anders angegeben, alle Mengen- und Prozentangaben auf das Gewicht bezogen, alle Drücke 0,10 MPa (abs.) und alle Temperaturen 20°C.

### Beispiel 1 (RTV2):

### Herstellung Komponente 1

In einem Labormischer werden 29 Teile eines vinyldimethylsiloxy-terminierten Polydimethylsiloxans mit einer Viskosität von 1000 mPa s mit 26 Teilen einer hydrophoben pyrogenen Kieselsäure mit einer spezifischen Oberfläche von 130m²/g versetzt und unter Rühren für 90 Minuten auf 180°C erwärmt. Anschließend werden schrittweise insgesamt 29 Teile eines Hydrogendimethylsiloxy-terminierten Polydimethylsiloxans mit einer Viskosität von 1000 mPa s (25°C) zugegeben.
Die so erhaltene Masse wird mit 14 Teilen Hydrogendimethylsiloxy-terminierten Polydimethylsiloxans mit einer Viskosität von 1000 mPa s (25°C), mit 4 Teilen vinyldimethylsiloxy-terminierten Polydimethylsiloxans mit einer Viskosität von 1000 mPa s und 1,7 Teilen eines Si-H Vernetzers bestehend aus Dimethylsiloxy-, Trimethylsiloxy und Methylhydrogensiloxygruppen versetzt, wobei der H-Gehalt des Si-H Vernetzers 0.17 Gew. % beträgt.

### Herstellung Komponente 2

In einem Labormischer werden 35 Teile eines vinyldimethylsiloxy-terminierten Polydimethylsiloxans mit einer Viskosität von 1000 mPa s mit 32 Teilen einer hydrophoben pyrogenen Kieselsäure mit einer spezifischen Oberfläche von 130m²/g versetzt und und unter Rühren für 90 Minuten auf 180°C erwärmt. Anschließend werden schrittweise insgesamt 32 Teile vinyldimethylsiloxy-terminierten Polydimethylsiloxans mit einer Viskosität von 1000 mPa s zugegeben. 12 Teile dieser Masse werden mit weiteren 26 Teilen eines vinyldimethylsiloxy-terminierten Polydimethylsiloxans mit einer Viskosität von 1000 mPa s, 45 Teilen eines vinyldimethylsiloxyterminierten Polydimethylsiloxans mit einer Viskosität von 200 mPa s, einem Platinkatalysator für die Hydrosilylierung (100 ppm Pt bezogen auf das Metall) und 0,7 Teilen 1,1,3,3-Tetramethyl-1,3-divinyldisiloxan versetzt.

Die Komponenten 1 und 2 werden im Verhältnis 9:1 vermischt und anschließend mit Polyglykoletherverbindungen (PE) der Formel [H₂C=CH-SiMe₂O_{1/2}]_{1.88}[SiMe₂OiPr]_{0.12}[SiMe_{2O2/2}]₄₄ [SiR'MeO_{2/2}]_{7.5} mit R' = (CH₂)₃(OC₂H₄)₄O_{Me}, welches nach dem Verfahren von EP 602128 B1, Seite 8, Zeile 44 bis Seite 9, Zeile 13 hergestellt wird, versetzt, in einer Menge, dass der in Tabelle 1 angegebene Gehalt erreicht wird. Anschliessend wird die Mischung für 5 Minuten bei Raumtemperatur mit Hilfe eines Laborrührers vermischt.
Die raumtemperaturvernetzbare Mischung wird anschließend 10 Minuten bei 100°C vernetzt.

Bei den Mischungen f,g,h,i werden zur Komponente 1 zusätzlich zu den 1,7 Teilen noch 2 weitere Teile des gleichen Si-H Vernetzers zugesetzt.

### Beispiel 2 LSR:

### Herstellung Komponente 3

In einem Labormischer werden 65 Teile eines vinyldimethylsiloxy-terminierten Polydimethylsiloxans mit einer Viskosität von 20000 mPa s mit 30 Teilen einer hydrophoben pyrogenen Kieselsäure mit einer spezifischen Oberfläche von 300 m²/g versetzt und und unter Rühren für 90 Minuten auf 180°C erwärmt. Nach Abkühlen wird die Mischung mit 4,5 Teilen eines Si-H Vernetzers bestehend aus Dimethylsiloxy-, Trimethylsiloxy und Methylhydrogensiloxygruppen versetzt, wobei der H-Gehalt des Si-H Vernetzers 0,48 Gew. % beträgt und mit einem Inhibitorbatch enthaltend 0.12 Teile Ethinylcyclohexanol.

### Herstellung Komponente 4

In einem Labormischer werden 66 Teile eines vinyldimethylsiloxy-terminierten Polydimethylsiloxans mit einer Viskosität von 20000 mPa s mit 30 Teilen einer hydrophoben pyrogenen Kieselsäure mit einer spezifischen Oberfläche von 300 m²/g versetzt und und unter Rühren für 90 Minuten auf 180°C erwärmt. Anschließend wird die so erhaltene Mischung mit einem Platinkatalysator (20 ppm Pt bezogen auf das Metall) für die Hydrosilylierung versetzt.

Die Komponenten 3 und 4 werden im Verhältnis 1:1 vermischt und anschließend mit Polyglykoletherverbindung (PE) von Beispiel 1 versetzt, in einer Menge, dass der in Tabelle 2 angegebene Gehalt erreicht wird. Anschliessend wird die Mischung für 5 Minuten bei Raumtemperatur mit Hilfe eines Laborrührers vermischt.
Die Mischung wird anschließend 5 Minuten bei 165°C vernetzt.

### Beispiel 3 HTV:

### Herstellung Komponente 5

In einem Kneter werden 34 Teile eines vinyldimethylsiloxy-terminierten Polydimethylsiloxans mit einem Molekulargewicht von ca. 500 000 g/mol mit 5 Teilen einer hydrophilen Kieselsäure mit einer Oberfläche von 150 m²/g (WACKER HDK^{®} V15) und 7 Teilen einer hydrophoben Kieselsäure mit einer Oberfläche von 300 g/m², 54 Teilen Aluminiumtrihydroxit (ATH, Martinal OL-104/S, Martinswerk GmbH, DE) und 3 Teilen eines α-ω OHfunktionellen Polydimethylsiloxans mit einer Viskosität von 50 mPa s vermischt. Die erhaltene Mischung wird anschließend mit 1 Teil einer Paste enthaltend 45% 2,5-bis-(ter.butylperoxy)-2,5-dimethylhexan in Siliconöl versetzt und mit Polyglykoletherverbindung (PE) von Beispiel 1 versetzt, in einer Menge, dass der in Tabelle 3 angegebene Gehalt erreicht wird. Anschliessend wird die Mischung 15 Minuten bei 165°C vernetzt.

Der Randwinkel Θ eines Wassertropfens auf dem Siliconelastomerprüfkörper als Maß für die Hydrophobie wird 3 Minuten nach Aufbringen des Tropfens gemessen.
Der Spezifische Durchgangswiderstand wird gemessen nach IEC 60093.
Die Spezifische Durchschlagfestigkeit wird gemessen an einer 1mm Platte in Anlehnung an IEC 60243.

**Tabelle 1, Beispiel 1**

| Mischung | a* | b | c | d | e | f | g* | h* | i* |
|---|---|---|---|---|---|---|---|---|---|
| Gehalt Polyglykoletherverbindung (PE)[%] | 0* | 0,25 | 0,5 | 0,75 | 1,0 | 2,0 | 3,0* | 4,0* | 5,0* |
| Gehalt Strukturelement (O-(CH₂)₂)₄-O) [%] | 0* | 0,008 | 0,017 | 0,025 | 0,033 | 0,067 | 0,100* | 0,133* | 0,167* |
| Härte Shore A | 27 | 29 | 29 | 30 | 29 | | | | |
| Reissfestigkeit [N/mm²] | 6,7 | 6,1 | 6,0 | 5,4 | 5,7 | | | | |
| Reissdehnung [%] | 612 | 590 | 608 | 562 | 618 | | | | |
| Weitereisswiderstand [N/mm] | 28,9 | 20,9 | 20,1 | 20,4 | 20,9 | | | | |
| Rückprall [%] | 57 | 51 | 50 | 50 | 46 | | | | |
| Spezifischer | 3,19 | 4,43 | 5,21 | 2,08 | 1,45 | 9,10 | 5,42 | 2,83 | 1,09 |
| Durchgangswiderstand [Ω cm] | 10¹⁵ | 10¹⁴ | 10¹³ | 10¹³ | 10¹³ | 10¹² | 10¹² | 10¹² | 10¹² |
| Durchschlagsfestigkeit [kV/mm] | 29 | 27 | 26 | 26 | 24 | 24 | 24 | 24 | 23 |
| Randwinkel nach 3 min [°] | 106 | 104 | 103 | 101 | 99 | 90 | 69 | 58 | 44 |

| | | | | | | | | | |
|---|---|---|---|---|---|---|---|---|---|
| *nicht erfindungsgemäss | | | | | | | | | |

**Tabelle 2, Beispiel 2**

| Mischung | a* | b | c | d | e |
|---|---|---|---|---|---|
| Gehalt Polyglykoletherverbindung (PE)[%] | 0* | 0,25 | 0,5 | 0,75 | 1,0 |
| Gehalt Strukturelement (O-(CH₂)₂)₄-O) [%] | 0* | 0,008 | 0,017 | 0,025 | 0,033 |
| Härte Shore A | 50 | 51 | 51 | 51 | 52 |
| Reissfestigkeit [N/mm²] | 8,5 | 7,9 | 8,2 | 8,9 | 8,4 |
| Reissdehnung [%] | 490 | 477 | 500 | 518 | 530 |
| Weitereisswiderstand [N/mm] | 22,5 | 21,7 | 21,7 | 21,8 | 21,6 |
| Rückprall [%] | 56 | 56 | 54 | 54 | 53 |
| Spezifischer Durchgangswiderstand [Ω cm] | 1,05 | 8,41 | 4,22 | 1,26 | 7,60 |
| | 10¹⁵ | 10¹⁴ | 10¹⁴ | 10¹⁴ | 10¹³ |
| Durchschlagsfestigkeit [kV/mm] | 24 | 23 | 26 | 25 | 24 |

| | | | | | |
|---|---|---|---|---|---|
| *nicht erfindungsgemäss | | | | | |

**Tabelle 3, Beispiel 3**

| Mischung | a* | b | c | d | e |
|---|---|---|---|---|---|
| Gehalt Polyglykoletherverbindung (PE)[%] | 0* | 0,25 | 0,5 | 0,75 | 1,0 |
| Gehalt Strukturelement (O-(CH₂)₂)₄-O) [%] | 0* | 0,008 | 0,017 | 0,025 | 0,033 |
| Härte Shore A | 73 | 71 | 70 | 68 | 65 |
| Reissfestigkeit [N/mm²] | 6,8 | 6,2 | 6,0 | 5,6 | 5,1 |
| Reissdehriung [%] | 204 | 217 | 268 | 292 | 335 |
| Weitereisswiderstand [N/mm] | 12,7 | 13,2 | 14,1 | 14,8 | 14,8 |
| Rückprall [%] | 42 | 41 | 39 | 38 | 36 |
| Spezifischer Durchgangswiderstand [Ω cm] | 4,98 | 2,00 | 9,68 | 4,00 | 1,68 |
| | 10¹⁴ | 10¹⁴ | 10¹³ | 10¹³ | 10¹³ |
| Durchschlagsfestigkeit [kV/mm] | 23 | 23 | 22 | 22 | 23 |

| | | | | | |
|---|---|---|---|---|---|
| *nicht erfindungsgemäss | | | | | |

Die Messergebnisse in den Tabellen 1 bis 3 zeigen, dass der Volumenwiderstand mit zunehmender Konzentration der einvernetzten Polyglykoletherverbindung (PE) schon bei kleinsten Konzentrationen messbar abnimmt, während die Durschlagsspannung über einen weiten Bereich auf konstantem Niveau bleibt.
Obwohl es sich bei dem Polyglykoletherverbindung (PE) um ein polares Molekül mit einem hydrophilen Charakter handelt, nimmt der spezifische Volumenwiderstand entsprechend der Konzentration der Polyglykoletherverbindung (PE) ab, aber wichtige Parameter wie Durchschlagfestigkeit und Hydrophobie (gemessen durch den Randwinkel) werden bei diesen kleinen Konzentrationen im Rahmen der Messgenauigkeit nicht nennenswert negativ beeinflusst.
Erst bei Konzentrationen oberhalb von 2% der Verbindung PE verzeichnet man einen signifikanten Abfall des Randwinkels.

## Patentansprüche

1. Zu Elastomeren vernetzbare Siliconmasse (M), welche einvernetzbare Polyglykoletherverbindungen (PE) mit mindestens einer ungesättigten Gruppe enthält, die Strukturelemente der allgemeinen Formel I
(O-(CH₂)ᵥ)_{w}-O (I),
enthalten, in der
**v** die Werte 1, 2, 3 oder 4 und
w Werte von 2 bis 50 bedeuten,
wobei der Gehalt an Strukturelementen der allgemeinen Formel I in der Siliconmasse (M) 0,001 bis 0,067 Gew.-% beträgt.

2. Verfahren zur Erniedrigung des spezifischen Volumenwiderstands einer zu Elastomeren vernetzten Siliconmasse, bei dem die unvernetzte Siliconmasse (M) mit einvernetzbaren Polyglykoletherverbindungen (PE) mit mindestens einer ungesättigten Gruppe modifiziert wird, die Strukturelemente der allgemeinen Formel I
(O-(CH₂)ᵥ)_{w}-O (I),
enthalten, in der
**v** die Werte 1, 2, 3 oder 4 und
w Werte von 2 bis 50 bedeuten,
wobei der Gehalt an Strukturelementen der allgemeinen Formel I in der Siliconmasse (M) 0,001 bis 0,067 Gew.-% beträgt.

3. Vernetzbare Siliconmasse (M) nach Anspruch 1 oder Verfahren nach Anspruch 2, bei denen die vernetzbare Siliconmasse (M) peroxidisch vernetzend oder additionsvernetzend ist.

4. Vernetzbare Siliconmasse (M) nach Anspruch 1, oder 3 oder Verfahren nach Anspruch 2 oder 3, bei denen die zu Elastomeren vernetzbare Siliconmasse (M) die Bestandteile
(A) 100 Gewichtsteile mindestens zwei Alkenylgruppen pro Molekül enthaltendes Polyorganosiloxan mit einer Viskosität bei 25°C von 0,1 bis 500 000 Pa·s,
(B) 1 bis 200 Gewichtsteile Füllstoff,
(C) Vernetzungskomponente, die ausgewählt wird aus
(C1) organischem Peroxid oder
(C2)mindestens zwei SiH-Funktionen pro Molekül enthaltender Organosiliciumverbindung in Kombination mit Hydrosilylierungskatalysator (C3) und
(D) einvernetzbare Polyglykoletherverbindungen (PE), die die Strukturelemente der allgemeinen Formel I gemäss Anspruch 1 enthalten,
wobei der Gehalt an Strukturelementen der allgemeinen Formel I in der Siliconmasse (M) 0,001 bis 0,067 Gew.-% beträgt, enthält.

5. Vernetzbare Siliconmasse (M) nach Anspruch 1, 3 oder 4 oder Verfahren nach Anspruch 2, 3 oder 4, bei denen die Siliconmasse (M) verstärkenden Füllstoff (B) mit einer BET-Oberfläche von mindestens 50 m²/g nach DIN EN ISO 9277 enthält.

6. Vernetzbare Siliconmasse (M) nach Anspruch 1, 3, 4 oder 5 oder Verfahren nach Anspruch 2, 3, 4 oder 5, bei denen die einvernetzbaren Polyglykoletherverbindungen (PE) die allgemeine Formel VI
[R₃SiO_{1/2}]ₐ[R¹R₂SiO_{1/2}]_{b}[ZR₂SiO_{1/2}]_{c}[ZRR¹SiO_{1/2}]_{d} [RR¹SiO_{2/2}]ₑ[R₂SiO_{2/2}]_{f}[SiO_{4/2}]_{g}[RSiO_{3/2}]ₕ[R¹SiO_{3/2}]ᵢ (VI)
aufweisen, in der die Reste
R Wasserstoffatome oder gleiche oder verschiedene einwertige, unsubstituierte oder halogensubstituierte über SiC gebundene C₁-C₁₂-Kohlenwasserstoffreste bedeuten, wobei mindestens einer der Reste R eine aliphatische Doppelbindung aufweist,
**R¹** die allgemeine Formel VII
E[OY]_{X}R² (VII)
bedeutet, in der
E eine Einfachbindung oder einen C₁-C₆- Alkylenrest,
**Y** gleiche oder verschiedene C₁-C₄-Alkylenreste bedeutet,
**R²** eine Hydroxylgruppe, einen C₁-C₁₀₀-Kohlenwasserstoffoxy-, C₁-C₆-Oxycarbonylalkylrest oder Siloxanrest bedeutet,
**x** die Werte 1 bis 20 hat, und
**Z** die Bedeutungen von **R²** aufweist oder ein Halogenatom bedeutet,
mit der Maßgabe, dass a, b, c und d jeweils unabhängig voneinander Werte von 0 bis 8 haben, die Summe a+b+c+d 2 bis 8 beträgt, die Summe a+b+c+d+e+f+g+h+i 10 bis 400 beträgt und das Verhältnis der Summen a+c+f+g+h: b+d+e+i 100: 1 bis 1: 1 beträgt.

7. Verwendung der vernetzbaren Siliconmasse (M) nach Anspruch 1, 3, 4, 5 oder 6 zur Herstellung von Elastomeren für den Einsatz in der Elektroisolation.

## Claims

1. Silicone composition (M) that can be crosslinked to give elastomers and that comprises polyglycol ether compounds (PE) which have at least one unsaturated group and which can be incorporated by crosslinking, and which comprise structural elements of the general formula I
(O-(CH₂)ᵥ)_{w}-O (I),
in which
**v** signifies the values 1, 2, 3, or 4, and
w signifies values from 2 to 50,
where the content of structural elements of the general formula I in the silicone composition (M) is from 0.001 to 0.067% by weight.

2. Process for lowering the volume resistivity of a silicone composition crosslinked to give elastomers, where the uncrosslinked silicone composition (M) is modified by polyglycol ether compounds (PE) which can be incorporated by crosslinking and which have at least one unsaturated group, and which comprise structural elements of the general formula I
(O-(CH₂)ᵥ)_{w}-O (I),
in which
**v** signifies the values 1, 2, 3, or 4, and
w signifies values from 2 to 50,
where the content of structural elements of the general formula I in the silicone composition (M) is from 0.001 to 0.067% by weight.

3. Crosslinkable silicone composition (M) according to Claim 1 or process according to Claim 2, where the crosslinkable silicone composition (M) is a peroxidically crosslinking or addition-crosslinking composition.

4. Crosslinkable silicone composition (M) according to Claim 1 or 3, or process according to Claim 2 or 3, where the silicone composition (M) which can be crosslinked to give elastomers comprises the following constituents:
(A) 100 parts by weight of polyorganosiloxane which comprises at least two alkenyl groups per molecule and which has a viscosity of from 0.1 to 500 000 Pa·s at 25°C,
(B) from 1 to 200 parts by weight of filler,
(C) crosslinking component which is selected from
(C1)organic peroxide or
(C2)organosilicon compound comprising at least two SiH functions per molecule in combination with hydrosilylation catalyst (C3), and
(D) polyglycol ether compounds (PE) which can be incorporated by crosslinking and which comprise the structural elements of the general formula I according to claim 1,
where the content of structural elements of the general formula I in the silicone composition (M) is from 0.001 to 0.067% by weight.

5. Crosslinkable silicone composition (M) according to Claim 1, 3, or 4, or process according to Claim 2, 3, or 4, where the silicone composition (M) comprises reinforcing filler (B) with a BET surface area of at least 50 m²/g in accordance with DIN EN ISO 9277.

6. Crosslinkable silicone composition (M) according to Claim 1, 3, 4, or 5, or process according to Claim 2, 3, 4, or 5, where the polyglycol ether compounds (PE) which can be incorporated by crosslinking have the general formula VI
[R₃SiO_{1/2}]ₐ[R¹R₂SiO_{1/2}]_{b}[ZR₂SiO_{1/2}]_{c}[ZRR¹SiO_{1/2} ]_{d} [RR¹SiO_{2/2}]ₑ[R₂SiO_{2/2}]_{f}[SiO_{4/2}]_{g}[RSiO_{3/2}]ₕ[R¹SiO_{3/2} ]ᵢ (VI)
in which the moieties
R signify hydrogen atoms or identical or different monovalent, unsubstituted or halogen-substituted C₁-C₁₂-hydrocarbon moieties bonded by way of SiC, where at least one of the moieties R has an aliphatic double bond,
**R¹** signifies the general formula VII
E[OY]_{X}R² (VII)
in which
E signifies a single bond or a C₁-C₆-alkylene moiety,
**Y** signifies identical or different C₁-C₄-alkylene moieties,
**R²** signifies a hydroxy group, a C₁-C₁₀₀-hydrocarbonoxy or C₁-C₆-oxycarbonylalkyl moiety, or siloxane moiety,
**x** has the values 1 to 20, and
**z** has the meanings of **R²** or signifies a halogen atom, with the proviso that a, b, c, and d have, respectively mutually independently, values from 0 to 8, the sum a+b+c+d is from 2 to 8, the sum a+b+c+d+e+f+g+h+i is from 10 to 400, and the ratio of the sums a+c+f+g+h: b+d+e+i is from 100: 1 to 1: 1.

7. Use of the crosslinkable silicone composition (M) according to Claim 1, 3, 4, 5, or 6 for the production of elastomers for use in electrical insulation.

## Revendications

1. Matière de silicone (M) pouvant être réticulée pour former des élastomères, qui contient des composés d'éther polyglycolique réticulables (PE) comprenant au moins un groupe insaturé, qui contiennent des éléments structuraux de formule générale I
(O-(CH₂)ᵥ)_{w}-O (I)
dans laquelle
v signifie les valeurs 1, 2, 3 ou 4, et
w signifie des valeurs de 2 à 50,
la teneur en éléments structuraux de formule générale I dans la matière de silicone (M) étant de 0,001 à 0,067 % en poids.

2. Procédé de réduction de la résistance volumique spécifique d'une matière de silicone réticulée pour former des élastomères, selon lequel la matière de silicone non réticulée (M) est modifiée avec des composés d'éther polyglycolique (PE) réticulables comprenant au moins un groupe insaturé, qui contiennent des éléments structuraux de formule générale I
(O-(CH₂)ᵥ)_{w}-O (I)
dans laquelle
v signifie les valeurs 1, 2, 3 ou 4, et
w signifie des valeurs de 2 à 50,
la teneur en éléments structuraux de formule générale I dans la matière de silicone (M) étant de 0,001 à 0,067 % en poids.

3. Matière de silicone pouvant être réticulée (M) selon la revendication 1 ou procédé selon la revendication 2, dans lequel la matière de silicone pouvant être réticulée (M) est réticulante par peroxyde ou réticulante par addition.

4. Matière de silicone pouvant être réticulée (M) selon la revendication 1 ou 3 ou procédé selon la revendication 2 ou 3, dans lequel la matière de silicone (M) pouvant être réticulée en élastomères contient les constituants
(A) 100 parties en poids d'un polyorganosiloxane contenant au moins deux groupes alcényle par molécule, d'une viscosité à 25 °C de 0,1 à 500 000 Pa·s,
(B) 1 à 200 parties en poids d'une charge,
(C) un composant de réticulation, qui est choisi parmi
(C1) un peroxyde organique ou
(C2) un composé d'organosilicium contenant au moins deux fonctions SiH par molécule en combinaison avec un catalyseur d'hydrosilylation (C3), et
(D) des composés d'éther polyglycolique réticulables (PE), qui contiennent les éléments structuraux de formule générale I selon la revendication 1,
la teneur en éléments structuraux de formule générale I dans la matière de silicone (M) étant de 0,001 à 0,067 % en poids.

5. Matière de silicone pouvant être réticulée (M) selon la revendication 1, 3 ou 4 ou procédé selon la revendication 2, 3 ou 4, dans lequel la matière de silicone (M) contient une charge renforçante (B) ayant une surface BET d'au moins 50 m²/g selon DIN EN ISO 9277.

6. Matière de silicone pouvant être réticulée (M) selon la revendication 1, 3, 4 ou 5 ou procédé selon la revendication 2, 3, 4 ou 5, dans lequel les composés d'éther polyglycolique réticulables (PE) présentent la formule générale VI
[R₃SiO_{1/2}]ₐ[R¹R₂SiO_{1/2}]_{b}[ZR₂SiO_{1/2}]_{c}[ZRR¹SiO_{1/2}]_{d} [RR¹SiO_{2/2}]ₑ[R₂SiO_{2/2}]_{f}[SiO_{4/2}]_{g}[RSiO_{3/2}]ₕ[R¹SiO_{3/2}]ᵢ (VI)
dans laquelle les radicaux
R signifient des atomes d'hydrogène ou des radicaux hydrocarbonés en C₁-C₁₂ identiques ou différents, monovalents, non substitués ou substitués par halogène, reliés par SiC, au moins un des radicaux R comprenant une double liaison aliphatique,
R¹ signifient la formule générale VII
E[OY]ₓR² (VII)
dans laquelle
E signifie une simple liaison ou un radical alkylène en C₁-C₆,
Y signifie des radicaux alkylène en C₁-C₄ identiques ou différents,
R² signifie un groupe hydroxyle, un radical oxyhydrocarboné en C₁-C₁₀₀, oxycarbonylalkyle en C₁-C₆ ou un radical siloxane,
x a une valeur de 1 à 20, et
Z présente les significations de R² ou signifie un atome d'halogène,
à condition qu'a, b, c et d aient chacun indépendamment les uns des autres des valeurs de 0 à 8, la somme a+b+c+d étant de 2 à 8, la somme a+b+c+d+e+f+g+h+i étant de 10 à 400, et le rapport des sommes a+c+f+g+h:b+d+e+i étant de 100:1 à 1:1.

7. Utilisation de la matière de silicone pouvant être réticulée (M) selon la revendication 1, 3, 4, 5 ou 6 pour la fabrication d'élastomères pour une utilisation en isolation électrique.
